(19) Europäisches Patentamt
European Patent Office
Office européen des brevets

(11) Veröffentlichungsnummer: **0 024 298**
**B1**

(12) # EUROPÄISCHE PATENTSCHRIFT

(45) Veröffentlichungstag der Patentschrift: **30.05.84**

(51) Int. Cl.³: **B 41 N 3/08,** G 03 F 7/02

(21) Anmeldenummer: **80104077.5**

(22) Anmeldetag: **14.07.80**

(54) **Schlussbehandlungslösung für Flachdruckplatten und Verfahren zum Behandeln einer entwickelten Flachdruckplatte.**

(30) Priorität: **16.07.79 US 58235**

(43) Veröffentlichungstag der Anmeldung: **04.03.81 Patentblatt 81/9**

(45) Bekanntmachung des Hinweises auf die Patenterteilung: **30.05.84 Patentblatt 84/22**

(84) Benannte Vertragsstaaten: **DE FR GB IT NL SE**

(56) Entgegenhaltungen:
**GB - A - 755 811**
**US - A - 3 745 028**

(73) Patentinhaber: **AMERICAN HOECHST CORPORATION, Route 202-206 North, Somerville, N.J. 08876 (US)**

(72) Erfinder: **Gillich, Thomas N., 3 Little Brook Road (Readington), Whitehouse Station, N.J. 08889 (US)**
Erfinder: **Walls, John E., 46 Center Street, Annandale, N.J. 08801 (US)**

(74) Vertreter: **Euler, Kurt Emil, Dr. et al, KALLE Niederlassung der Hoechst AG Rheingaustrasse 190 Postfach 3540, D-6200 Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 024 298 B1

ACTORUM AG

**Beschreibung**

Die Erfindung betrifft die Verbesserung von Schlussbehandlungslösungen für Flachdruckplatten. Schlussbehandlungslösungen werden in der Regel dazu verwendet, die Nichtbildstellen einer entwickelten Flachdruckplatte in einem hydrophilen Zustand zu halten und die Bildstellen zu schützen. Die verbesserte erfindungsgemässe Schlussbehandlungslösung konserviert die Platte vor dem Drucken und kann sehr schnell entfernt werden, so dass nach dem Einlegen der Platte und dem Ingangsetzen der Druckmaschine das Bild die Farbe sofort annimmt und der Hintergrund sehr sauber ist.

Der Erfolg der bekannten Flachdruckplatten liegt darin begründet, dass Bildstellen Farbe annehmen und Wasser abstossen (somit oleophil sind), während Nichtbildstellen Farbe abstossen und Wasser annehmen (somit hydrophil sind). Dies gilt unabhängig davon, ob die Platte negativ arbeitet, d.h. die lichtempfindliche Schicht bei der Belichtung mit aktinischem Licht an den vom Licht getroffenen Stellen gehärtet wird, so dass die nicht getroffenen Teile vom Entwickler entfernt werden, oder ob sie positiv arbeitet, d.h. die lichtempfindliche Schicht bei der Belichtung mit aktinischem Licht an den vom Licht getroffenen Stellen löslich wird und diese Stellen mit Entwickler entfernt werden können.

Es ist wünschenswert, dass die Bildstellen sehr oleophil sind, so dass nach dem Einlegen einer Platte in die Druckmaschine bereits nach einer möglichst geringen Anzahl von Druckvorgängen die Bildstellen Farbe von den Farbwalzen annehmen, auf das Gummituch abgeben und von dort auf das Papier weiterleiten. Diese Fähigkeit ist als schnelle Farbannahme bekannt und stellt einen wirtschaftlichen Faktor dar wegen der Verluste an Papier und Maschinenlaufzeit, die sich ergeben, wenn das Bild nur langsam Farbe aufnimmt und weiterleitet. Dieser Zustand wird als Blindwerden bezeichnet.

Es wurde bereits erwähnt, dass die Nichtbildstellen von Anfang an hydrophil sein müssen, d.h. schon beim Einlegen in die Druckmaschine und während der ganzen Laufzeit der Maschine. Unvollständig hydrophile Nichtbildflächen nehmen etwas Farbe an und verursachen einen von Farbe verunreinigten Hintergrund, ein Zustand, der als Tonen bekannt ist.

Um die Verzögerung der Farbannahme und das Tonen auf ein Minimum zu reduzieren, werden entwickelte Platten nach dem Abspülen mit Wasser gewöhnlich mit einer Druckplattenschlussbehandlungslösung behandelt, die in der Regel ein hydrophiles Kolloid, ein oberflächenaktives Mittel, Salze und Wasser enthält. Dieser Vorgang wird Hydrophilierung oder Desensibilisierung genannt.

Bisher wurden häufig Gummi arabicum und synthetische Gummis für Schlussbehandlungslösungen für Flachdruckplatten benutzt. Doch kommt es bei diesen Mitteln oft zu einer Beeinträchtigung der Farbannahme durch die Bildstellen.

Es gibt verbesserte Schlussbehandlungslösungen, die Wasser, Tapiokadextrin, ein anionisches oberflächenaktives Mittel, sowie Glycerin als Feuchthaltemittel enthalten. Trotz der Verbesserung kam es hin und wieder zu Blindwerden, die Leistung war nicht beständig. Das Tapiokadextrin muss bis zum Auflösen längere Zeit erhitzt werden.

Eine weitere verbesserte Schlussbehandlungslösung, die zusätzlich ein Konservierungsmittel darstellt, wird in der US-A 4 162 920 beschrieben. Bei dieser Schlussbehandlungslösung wird Tapiokadextrin als hydrophiles Kolloid verwendet. Weitere Bestandteile sind eine Mischung aus anionischen und nichtionischen oberflächenaktiven Mitteln, Glycerin und einer Erdölfraktion zur Auflösung des nichtwässrigen oberflächenaktiven Mittels. Dabei wird eine Emulsion gebildet.

Bei dieser Schlussbehandlungslösung kommt es zwar nicht zu einer Beeinträchtigung der Farbannahme durch die Bildstellen. Da sie als Emulsion vorliegt, setzt sie sich jedoch bei längerem Stehen ab und ist somit für maschinelle Verarbeitung nicht verwendbar.

In der US-A 4 143 021 ist eine wässrige Schlussbehandlungslösung beschrieben, bei der ein Polyoxyalkylenglykol zur Vermeidung von Klebrigkeit von trocknenden Filmen auf Flachdruckplatten verwendet wird, die bei den genannten bekannten Mischungen aufgetreten war.

Aus der US-A 3 745 028 ist ein wässriges Konservierungsmittel für Druckplatten bekannt, das zwingend die folgenden Komponenten enthält: a) 1 bis 5 Gew.-% wasserlösliche Polyethylenglykole mit einem Molekulargewicht von mindestens 4000 und b) 1 bis 30 Gew.-% Hydrokolloide wie Gummi arabicum, Natriumcarboxymethylcellulose oder auch Polyvinylpyrrolidon; bevorzugt soll das Konservierungsmittel jedoch auch 0,25 bis 5 Gew.-% Dialdehydpolysaccharidderivate enthalten. Zu den übrigen möglichen Komponenten zählen auch Säuren (pH-Werte von 2 bis 5), Molybdate, antibakterielle Mittel, Korrosionsinhibitoren, organische Lösemittel und oberflächenaktive Mittel. In der Beschreibung und den Vergleichsbeispielen wird ausdrücklich ausgeführt, dass Polyethylenglykole mit einem niedrigeren Molekulargewicht als 4000 ungeeignet sind.

Es ist ein Ziel dieser Erfindung, eine wässrige Lösung zu schaffen, die die Nichtbildflächen einer Flachdruckplatte hydrophiliert und gleichzeitig die Aufnahmefähigkeit der Bildflächen für Farbe steigert, so dass die Einfärbung bereits nach einer sehr geringen Anzahl von Drucken auf der Druckmaschine vollständig ist. Ein weiteres Ziel der Erfindung ist es, eine Lösung zu schaffen, deren Herstellung, Handhabung und Aufbewahrung vereinfacht sind. Zu den Zielen gehört ausserdem die Schaffung einer Lösung, die sowohl bei maschinellen als auch bei manuellen Verfahren verwendet werden kann, und die durch Abspülen mit Wasser oder durch Kontakt mit den Feuchtwalzen einer Flachdruckmaschine leicht entfernt werden kann. Daneben ist es ein Ziel, alle zuvor genannten Eigenschaften in einer Lösung zu vereinen, die zuverlässig und beständig in ihrer Leistung ist.

Erfindungsgemäss wird eine wässrige Schlussbehandlungslösung für Flachdruckplatten gemäss Patentanspruch 1 vorgeschlagen.

Die für die erfindungsgemässe Druckplattenschlussbehandlungslösung geeigneten hydrophilen Polymeren sind Stärkedextrine und Polyvinylpyrrolidon. Dextrine werden aus natürlich vorkommenden Stärken, z.B. Kartoffel-, Mais- oder Tapiokastärke hergestellt. Diese natürlich vorkommenden Stärken werden einer Wärmebehandlung unterzogen, wodurch sie von ihrem zunächst wasserunlöslichen körnigen Zustand bis zu einem von den Bedingungen der Behandlung abhängigen Grad in eine wasserlösliche Form umgewandelt werden.

Jedes Dextrin ist für den Zweck dieser Erfindung geeignet, vorausgesetzt, es ist im wesentlichen in kaltem Wasser löslich. Unter einem «im wesentlichen in kaltem Wasser löslichen» Dextrin ist ein Dextrin zu verstehen, von dem beim Verrühren von 8 g bei 22 °C in 92 g Wasser nach 15 Minuten ungelöste Dextrinrückstände oder -ablagerungen von höchstens 5 Gew.-% zurückbleiben. Dextrine, die bei dieser Prüfung zu 98 Gew.-% oder mehr löslich sind, werden jedoch bevorzugt. Im wesentlichen in kaltem Wasser lösliche Dextrine gemäss der hier gegebenen Definition haben den Vorteil, dass Schlussbehandlungslösungen, in denen sie enthalten sind, nach dem Auftragen auf eine Druckplatte zu einem dünnen Film und dem Trocknen dieses Films leicht in kaltem Wasser wieder aufgelöst werden können, indem man sie entweder in einem getrennten Arbeitsgang abspült oder die Feuchtwalzen der Druckmaschine auf sie einwirken lässt.

Zwar sind alle Dextrine, die der obigen Forderung nach Kaltwasserlöslichkeit entsprechen, geeignet, doch werden Tapiokadextrine bevorzugt. In der gesamten Lösung sind die Dextrine zu 1,5 bis 10 Gew.-% enthalten. Ein Gewichtsanteil von 3 bis 5 Gew.-% wird bevorzugt.

Wie bereits erwähnt, ist Polyvinylpyrrolidon (PVP) ebenfalls erfindungsgemäss als hydrophiles Polymeres geeignet. Polyvinylpyrrolidon gibt es mit verschiedenen Molekulargewichten. Im grossen und ganzen sind Polyvinylpyrrolidone mit einem Molekulargewicht zwischen 3000 und 140 000 geeignet, doch werden solche mit einem Molekulargewicht zwischen 8000 und 100 000 bevorzugt. Der gewichtsmässige Anteil an PVP ist geringer als bei Dextrinen. Ein Anteil zwischen 0,1 und 3 Gew.-% ist wirksam, wobei ein Anteil zwischen 1 und 2 Gew.-% bevorzugt wird.

Ein richtig gewähltes oberflächenaktives Mittel verleiht der Schlussbehandlungslösung erwünschte Eigenschaften. Zwar stehen alle Bestandteile in Wechselwirkung zueinander und sollten daher kombiniert geprüft werden, doch hat es sich gezeigt, dass ein gutes oberflächenaktives Mittel zu einem fehlerfreien Hintergrund, zur Bildung eines glatten Films, zu geringer Schaumwirkung, zu einem hohen Trübungspunkt, zu leichtem Ablaufen von den Bildstellen und u.U. sogar zur Förderung der Oleophilie des Bildes beitragen kann. Ausserdem sorgt es für die richtige Oberflächenspannung und ist selbstverständlich mit den anderen Bestandteilen kompatibel, so dass keine Ausfällung auftritt. Des weiteren hat es keine angreifenden oder toxischen Wirkungen.

Erfindungsgemäss werden nichtionische oberflächenaktive Mittel eingesetzt. Die Verwendung des Begriffs des «hydrophil-lipophilen Gleichgewichts» ist gebräuchlich, um die einzelnen oberflächenaktiven Mittel anhand des relativen Einflusses ihrer hydrophilen und lipophilen Gruppen numerisch zu kennzeichnen. Der Begriff des «hydrophil-lipophilen Gleichgewichts (HLB)» leistet wertvolle Hilfe bei der Auswahl eines geeigneten nichtionischen oberflächenaktiven Mittels. Zwar muss die Wirksamkeit der gesamten Schlussbehandlungslösung geprüft werden, doch ist der HLB-Wert eine wertvolle Hilfe bei der Auswahl einzelner oberflächenaktiver Mittel bzw. von Mischungen solcher Stoffe. So wurde gefunden, dass mindestens ein nichtionisches oberflächenaktives Mittel, das aus einer einzelnen oder aus mehreren Komponenten bestehen kann und einen HLB-Wert von 12 bis 18 hat, verwendet werden muss, bevorzugt liegt der HLB-Wert jedoch zwischen 13 und 16. In der fertigen Lösung beträgt der Gehalt an diesem oberflächenaktiven Mittel 0,2 bis 7 Gew.-%, bevorzugt sollte er jedoch zwischen 0,25 und 3,5 Gew.-% liegen.

Zu den geeigneten nichtionischen oberflächenaktiven Mitteln gehören ethoxylierte aliphatische Fluorkohlenstoffe und ethoxylierte Pflanzenöle. Ethoxylierte aliphatische Alkohole sind besonders geeignet, zu ihnen gehören z.B. Tridecyloxypolyoxyethylenethanol, Polyoxyethylentridecylether mit 12, 15 oder 6 Mol Ethylenoxid, Polyoxyethylendecylether (4 Mol Ethylenoxid) und Polyoxyethylenfettalkohol.

Geeignet ist auch die Gruppe der ethoxylierten Alkylphenole, zu denen z.B. Nonylphenoxypolyoxyethylenethanol mit 1,5, 4, 5 oder 15 Mol Ethylenoxid, Octylphenoxypolyoxyethylenethanol mit 1, 5, 7 oder 40 Mol Ethylenoxid und Isooctylphenoxypolyoxyethylenethanol (125 Mol Ethylenoxid) gehören. Ausserdem geeignet sind Tetramethyldecindiol, wenn es in Mischungen verwendet wird, und Sorbit- und Sorbitanderivate, zu denen Polyoxyethylensorbitlanolinderivate, Polyoxyethylensorbitanmonolaurat, -monopalmitat, -monostearat, -monooleat, Sorbitanmonolaurat, Sorbitanmonopalmitat, Sorbitanmonostearat, Sorbitanmonooleat und Sorbitantrioleat gehören.

Die oben als Beispiele aufgeführten oberflächenaktiven Mittel sind geeignet, wenn ihr eigener HLB-Wert oder der ihrer Mischungen innerhalb der obenerwähnten Bereiche liegt. Im allgemeinen sind oberflächenaktive Mittel mit einem HLB-Wert unterhalb 10 nicht genügend wasserlöslich. Oberflächenaktive Mittel mit einem HLB-Wert von knapp über 10 wären zwar wasserlöslich und würden dazu beitragen, das Bild oleophil zu machen, würden jedoch auch dazu führen, dass der Hintergrund eine Neigung zum Tonen entwickelt. Bei HLB-Werten von über 18 würde der Hintergrund zwar sauber, doch würde dadurch gleichzeitig die Farbannahme der Bildstellen beeinträchtigt.

Sind zwei oberflächenaktive Mittel mit einem hohen und einem niederen HLB-Eckwert gegeben, kann man mit Hilfe der folgenden Formeln eine Mischung herstellen, die den gewünschten HLB-Wert aufweist:

$$a)\ \frac{100\ (\text{gewünschter HLB-Wert} - S_1)}{(S_2 - S_1)} = \%\ S_2$$

b) $\%\ S_1 = 100 - \%\ S_2$

wobei

$S_1$ = HLB-Wert des oberflächenaktiven Mittels mit niederem HLB-Wert

$S_2$ = HLB-Wert des oberflächenaktiven Mittels mit hohem HLB-Wert ist.

Es können auch Gemische aus mehr als zwei Komponenten verwendet und auf einer ähnlichen Grundlage berechnet werden.

Für die Eignung einer Schlussbehandlungslösung für Flachdruckplatten ist die Oberflächenspannung von Bedeutung. Ein Oberflächenspannungsbereich zwischen 25 und 40 dyn/cm$^2$ ist wünschenswert. Obwohl, wie oben erwähnt, nichtionische Mittel insgesamt zufriedenstellend sind, werden die ethoxylierten linearen Alkohole bevorzugt, wobei auch die ethoxylierten Aryl- und Alkylarylderivate und verschiedene Sorbitanderivate vorteilhaft sind und in dieser Reihenfolge bevorzugt werden sollten.

Ein Feuchthaltemittel ist ebenfalls ein zwingender Bestandteil der Flachdruckplattenschlussbehandlungslösung gemäss dieser Erfindung. Feuchthaltemittel verhindern das Austrocknen der Schlussbehandlungslösung auf der Platte und tragen so dazu bei, das Entfernen der Schlussbehandlungslösung zu erleichtern, was entweder durch nachfolgendes Abspülen mit Wasser geschieht oder, nach dem Einlegen der Druckplatte in die Druckmaschine, durch Kontakt der Feuchtwalze mit der Druckplattenoberfläche. Das schnelle Entfernen des Schlussbehandlungslösungsfilms begünstigt die schnelle Farbannahme durch das Bild, was einen ökonomischen Faktor darstellt.

Brauchbare Feuchthaltemittel sind Polyethylenglykole, Polypropylenglykole, Ethylenglykol und Propylenglykol, wobei den Polyethylenglykolen ein leichter Vorzug eingeräumt wird. Das Polyethylenglykol hat ein durchschnittliches Molekulargewicht von weniger als 800. Der Anteil eines Feuchthaltemittels beträgt 0,3 bis 5 Gew.-%, bevorzugt werden 1 bis 3 Gew.-%.

Salze werden hinzugefügt, um den pH-Wert zu regeln und um zur hydrophilierenden Wirkung auf den Hintergrund beizutragen. Die Salze gehören zur Gruppe aus Natriumnitrat, Natriumsulfat, Calciumnitrat, Magnesiumnitrat, Magnesiumsulfat, Natriumphosphat, Ammoniumphosphat, Ammoniumnitrat, Ammoniumsulfat, Natriumacetat, Kaliumtartrat, Mono-, Di- und Trinatriumphosphat und den entsprechenden Kaliumphosphaten. Den Phosphaten wird dabei der Vorzug gegeben. Der Gewichtsanteil der Salze in der Flachdruckplattenschlussbehandlungslösung beträgt 0,05 bis 13 Gew.-%. Bevorzugt wird jedoch ein engerer Bereich von 0,1 bis 1,5 Gew.-%.

Der pH-Wert kann des weiteren mit Säuren reguliert werden, wobei bevorzugt die Säure verwendet wird, von der das Salz abstammt. Der generell wünschenswerte pH-Wert-Bereich liegt zwischen 2,5 und 9,5. Ausserhalb dieses Bereichs neigen die Druckplatten zum Blindwerden. Bevorzugt wird ein pH-Wert-Bereich von 4,5 bis 8.

Für die Wirksamkeit einer frisch hergestellten Schlussbehandlungslösung ist es zwar nicht unbedingt erforderlich, doch ist ein antibakterielles oder bakteriostatisches Mittel zu ihrer besseren Konservierung wünschenswert. Zahlreiche Phenole und Phenolderivate werden auf dem Markt als Bakteriostatica und Fungistatica angeboten. Lösungen, die nur wenige Zehntel Prozent oder auch einen noch geringeren Anteil an diesen Mitteln enthalten, sind bereits ausreichend haltbar.

Um die Bestandteile auf ihre Eignung zu prüfen, wird aus dem hydrophilen Polymeren, dem oberflächenaktiven Mittel und dem Feuchthaltemittel eine Stammlösung hergestellt, an der beschleunigte Prüfungen unter Normbedingungen durchgeführt werden. Zur Prüfung oberflächenaktiver Mittel wird z.B. eine Stammlösung aus 91,95 Gew.-% Wasser, 8 Gew.-% Dextrin und 0,05 Gew.-% Trinatriumphosphat hergestellt. Zu dieser Lösung wird genügend 85 Gew.-%ige Phosphorsäure gegeben, dass der pH-Wert 7,0 beträgt. Zu dieser Stammlösung werden dann verschiedene oberflächenaktive Mittel gegeben.

Belichtete und entwickelte Flachdruckplatten werden von Hand mit den Testlösungen beschichtet und dann 15 Minuten auf 100 °C erhitzt. Nach dem Abkühlen wird die Platte ohne Feuchtung mit Druckfarbe mit starken Abriebeigenschaften eingefärbt. Die Farbe wird dann mit Wasser abgewaschen, und die Platte wird auf ihre Druckeigenschaften untersucht. Die hydrophilen Polymeren werden auf ähnliche Art geprüft, und zwar zunächst auf ihre Kaltwasserlöslichkeit hin und dann durch Auftragen als Film auf eine Flachdruckplatte.

Auch nach zehnminütigem Erhitzen in einem Ofen bei 70 °C lässt sich der Film durch Abwaschen mit kaltem Wasser leicht vom Bild entfernen. Erfindungsgemäss geeignete Schlussbehandlungslösungen müssen so beschaffen sein, dass die Oleophilie des Bildes erhalten bleibt, damit eine schnelle und vollständige Farbannahme erreicht wird. Gleichzeitig muss der Hintergrund während des Aufbewahrens vor dem Drukken geschützt sein, damit er seine vollständige Hydrophilie beibehält. Beim Einfärben muss die Platte die Fähigkeit besitzen, Farbe abzustossen, die eventuell bei der Handhabung darauf geraten ist oder die auf den Hintergrund gelangt ist, wenn die Farbauftragwalzen ohne ausreichende Feuchtung eingeschaltet werden.

Die erfindungsgemässen Schlussbehandlungslösungen werden mit verschiedenen Techniken geprüft. Eine davon ist, mit der Schlussbehandlungslösung konservierte Druckplatten aufzubewahren und das Einfärben zu beobachten. Beschleunigte Prüfungen wurden durchgeführt, indem man die Platten auf 70, 100 und 120 °C erhitzte. Andere Platten wurden im Kühlschrank und bei Zimmertemperatur gelagert. Alle diese Platten wurden folgendermassen geprüft:

1. Einfärben ohne Feuchtung, dann Erhitzen der Platte und Abspülen mit Wasser.

2. Einfärben ohne Feuchtung und sofortiges Abspülen mit Wasser.

3. Abspülen der Platte, Trocknen und Einfärben, erneutes Abspülen mit Wasser.

4. Abspülen der Platte mit Wasser und Einfärben unter Feuchtung.

In allen Fällen muss die Platte nach der Prüfung einen sauberen Hintergrund und ein vollständig oleophiles Bild aufweisen. Gemäss nachstehend aufgeführten Beispielen wurden verschiedene subtraktive Schlussbehandlungslösungen für positiv und negativ arbeitende Flachdruckplatten hergestellt.

Die erfindungsgemässen Lösungen sind besonders geeignet für Flachdruckplatten, die mit Beschichtungen versehen sind, die Diazoniumsalze, 1,2-Naphthochinon-2-diazid-sulfonsäureester und Polymere wie Polyvinylformal und Novolake enthalten. Zusätzlich zu den positiv und negativ arbeitenden vorsensibilisierten Flachdruckplatten wurden auch vom Verbraucher zu beschichtende Träger («wipe-on») erfolgreich geprüft, wie es in den nachstehend aufgeführten Beispielen 11 bis 15 beschrieben ist.

Die Wirksamkeit der Schlussbehandlungslösung wurde in allen Fällen mit mehreren strengen Verfahren geprüft, die eventuell vorhandene verborgene Nachteile der Lösungen deutlich machen sollten. Als Abschlussprüfung wurden die behandelten Platten in eine Druckmaschine eingelegt, und es wurden einige Tausend brauchbare Kopien hergestellt. Besonderer Wert wurde dabei auf die Geschwindigkeit und die Vollständigkeit der Einfärbung des Bildes gelegt.

Ein Verfahren bestand darin, eine entwickelte Platte entweder von Hand oder maschinell mit der zu prüfenden Lösung zu behandeln. Die eine Hälfte der Platte wurde sodann ohne Feuchtung mit irgendeiner handelsüblichen Druckfarbe mit starken Abriebeigenschaften eingefärbt und trockengerieben. Die andere Hälfte der Druckplatte blieb unbehandelt. Die ganze Platte wurde 15 Minuten auf 100 °C erhitzt. Nach dem Trocknen wurde die Platte auf Raumtemperatur abgekühlt, und die zuvor eingefärbte Seite wurde mit einem feuchten Tampon überwischt. Die unbehandelte Seite wurde mit einem feuchten Tampon eingefärbt. In beiden Fällen muss eine gute Schlussbehandlungslösung verhindern, dass sich Farbe am Hintergrund festsetzt, während sie gleichzeitig nicht verhindern darf, dass das Bild vollständig Farbe annimmt.

Ein alternatives Verfahren zur Prüfung der erfindungsgemässen Schlussbehandlungslösungen bestand darin, mit der Lösung behandelte Platten einer künstlichen Alterung zu unterwerfen. Die Alterung wurde an mit der zu prüfenden Lösung behandelten Platten bei 4,5 und bei 50 °C eingeleitet. Die Proben wurden in Abständen von 10 bis 15 Tagen durch Einfärben der Platte mit einem feuchten Tampon geprüft. Wie im zuvor beschriebenen Versuch sind auch hier nur die Versuchsergebnisse zufriedenstellend, wo der Hintergrund keine Farbe annimmt und das Bild schnell, vollständig und gleichmässig von Farbe bedeckt wird. Dieser Versuch dauerte bis zu seinem Abschluss 143 Tage.

Die folgenden Beispiele veranschaulichen die Erfindung.

Beispiel 1

Eine subtraktive Schlussbehandlungslösung für negativ und positiv arbeitende Platten, deren Zusammensetzung in Gew.-% folgendermassen war, wurde hergestellt:

| | Gew.-% |
|---|---|
| Wasser | 88,07 |
| Tapiokadextrin | 6,00 |
| oberflächenaktives Mittel A | 3,00 |
| Tetraethylenglykol | 2,00 |
| Mononatriumphosphat | 0,33 |
| Trinatriumphosphat | 0,40 |
| antibakterielles Mittel A | 0,20 |

Zur Herstellung dieser Schlussbehandlungslösung wurden 25% des Wassers auf 65 °C erhitzt und das Tapiokadextrin unter Rühren dazugegeben. Das Rühren wurde 10 Minuten fortgesetzt, dann wurde die Wärmezufuhr gestoppt und der Rest des Wassers hinzugefügt. Die anderen Zutaten wurden in beliebiger Reihenfolge hinzugegeben.

Das oberflächenaktive Mittel A ist Isooctylphenoxypolyoxyethylenethanol (12,5 Mol Ethylenoxid). Das antibakterielle Mittel A ist 1-(3-Chlor-allyl)-3,5,7-triaza-1-azonia-adaman-tanchlorid.

Zur Herstellung einer negativ arbeitenden Druckplatte wurde ein Schichtträger aus Aluminium, das durch Bürsten mit einer wässrigen Schleifmittelsuspension oberflächlich aufgerauht worden war, mit der folgenden Lösung beschichtet und getrocknet.

| | |
|---|---|
| 0,3 g | eines Polykondensationsprodukts aus 1 Mol 3-Methoxy-diphenylamin-4-diazoniumphosphat und 1 Mol 4,4′-Bismethoxymethyl-diphenylether, isoliert als Mesitylensulfonat und |
| 0,6 g | Polyvinylformal (Molgewicht um 3000, 5,5 bis 7% Vinylalkoholeinheiten, 22 bis 30% Vinylacetateinheiten und 50% Vinylformaleinheiten) in |
| 50 ml | Diacetonalkohol, |
| 20 ml | Ethylenglykolmethyletheracetat und |
| 30 ml | Butanon. |

Die Druckplatte wurde unter einer Negativvorlage belichtet und mit einer Lösung aus

| | |
|---|---|
| 4 g | Natriumdihydrogenphosphat, |
| 70 ml | Wasser und |
| 30 ml | Propanol |

entwickelt.

Zur Herstellung einer positiv arbeitenden Druckplatte wurde ein Schichtträger aus elektrolytisch aufgerauhtem und anodisch oxydiertem Aluminium mit der folgenden Lösung beschichtet und getrocknet:

| | |
|---|---|
| 0,73 g | des Veresterungsprodukts aus 1 Mol 2,3,4-Trihydroxy-benzophenon und 2 Mol Naphthochinon-(1,2)-diazid-(2)-5-sulfonsäurechlorid, |
| 0,73 g | des Veresterungsprodukts aus 1 Mol 2,2'-Dihydroxy-dinaphthyl-(1,1')-methan und 2 Mol Naphthochinon-(1,2)-diazid-(2)-5-sulfonsäurechlorid, |
| 0,78 g | Naphthochinon-(1,2)-diazid-(2)-4-sulfonsäurechlorid, |
| 0,32 g | Kristallviolettbase, |
| 6,25 g | Kresol-Formaldehyd-Novolak (Schmelzbereich 105–120 °C), |
| 0,52 g | Epoxidharz und |
| 0,75 g | Tris-β-chlorethyl-phosphat in |
| 80 ml | Ethylenglykolmonomethylether und |
| 15 ml | Butylacetat. |

Die Druckplatte wurde unter einer Positivvorlage belichtet und mit einer Lösung von

| | |
|---|---|
| 5,3 g | Natriummetasilikat × 9 Wasser, |
| 3,4 g | Trinatriumphosphat × 12 Wasser und |
| 0,3 g | Natriumdihydrogenphosphat (wasserfrei) in |
| 91 ml | Wasser |

entwickelt.

Beide Platten wurden mit der oben beschriebenen Schlussbehandlungslösung behandelt und trockengerieben. Sie wurden dann der oben beschriebenen Alterungsprüfung unterworfen.

Alle Platten wiesen einen völlig sauberen Hintergrund auf, sowie ein Bild, das sofort und ohne Anzeichen von Blindwerden Farbe annahm.

Beispiele 2 bis 10

Unter Anwendung des in Beispiel 1 beschriebenen Verfahrens wurden auf gleiche Weise innerhalb des nachfolgend aufgeführten Variationsbereiches verschiedene Schlussbehandlungslösungen hergestellt, um den Einfluss verschiedener Anteile hydrophilen filmbildenden Harzes, oberflächenaktiver Mittel, Feuchthaltemittel und Alkaliphosphate auf die Zusammensetzung der Lösungen zu untersuchen:

| | Gew.-% |
|---|---|
| Hydrophile filmbildende Harze | 1,5–8,0 |
| oberflächenaktives Mittel | 1,0–3,0 |
| Feuchthaltemittel | 1,0–3,0 |
| Alkaliphosphat | 0,6–9,5 |
| Bakteriostaticum/Fungistaticum | 0,1–0,2 |
| Wasser | auf 100 |

Unter Berücksichtigung der vorerwähnten Einschränkungen hinsichtlich der Anteile der einzelnen Bestandteile in Gew.-% sind in der folgenden Tabelle 1 andere Zusammensetzungen aufgeführt.

Die in Tabelle 1 angegebenen oberflächenaktiven Mittel setzen sich folgendermassen zusammen:

| Oberflächenaktives Mittel (Netzmittel) | Zusammensetzung |
|---|---|
| B | Nonylphenoxypolyoxyethylenethanol (15 Mol Ethylenoxid) |
| C | Octylphenoxypolyoxyethylenethanol (9,5 Mol Ethylenoxid) |
| D | Polyoxyethylentridecylether (12 Mol Ethylenoxid) |
| E | Polyoxyethylentridecylether (15 Mol Ethylenoxid) |
| G | Sorbitanmonolaurat |
| H | Polyoxyethylensorbitanmonolaurat |
| I | Polyoxyethylendecylether (6 Mol Ethylenoxid) |

Die in Tabelle 1 angegebenen Feuchthaltemittel haben folgende Zusammensetzung:

| Feuchthaltemittel | Zusammensetzung und mittleres Molekulargewicht |
|---|---|
| A | Polyethylenglykol (200) |
| B | Polyethylenglykol (400) |

Der antibakterielle Wirkstoff B besteht aus 6-Acetoxy-2,4-dimethyl-1,3-dioxan.

Auf gleiche Weise wie im Beispiel 1 wurde jede dieser Lösungen auf positiv oder negativ arbeitenden Flachdruckplatten geprüft und dabei den oben erwähnten Prüfungen unterworfen. Alle diese Platten wiesen einen völlig sauberen Hintergrund auf und zeigten ein Bild, das sofort und ohne ein Anzeichen von Blindwerden Farbe annahm.

Tabelle 1

| Bestandteil | Beispiel 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| $H_2O$ | 528.4 | 522.9 | 549.6 | 577.8 | 529.3 | 568.1 | 538.8 | 554.9 | 550.8 | 562.2 | 556.0 | 560.1 | 567.6 | 570.0 | 513.6 |
| Tapiokadextrin | 36.0 | 48.0 | 36.0 | – | 36.0 | 15.0 | 27.0 | 27.0 | 18.0 | – | 18.0 | 18.0 | 12.0 | 15.0 | 48.0 |
| PVP | – | – | – | 9.0 | – | – | – | – | – | 18.0 | – | – | – | – | – |
| Netzmittel A | 18.0 | – | – | – | – | – | – | 6.0 | – | – | – | – | – | – | – |
| Netzmittel B | – | – | 6.0 | – | 12.0 | – | – | – | – | – | – | – | – | – | – |
| Netzmittel C | – | – | – | 6.0 | – | – | – | – | – | – | 18.0 | – | – | – | – |
| Netzmittel D | – | – | – | – | – | – | 18.0 | – | – | 12.0 | – | – | – | – | – |
| Netzmittel E | – | 12.0 | – | – | – | – | – | – | – | – | – | 6.0 | – | – | – |
| Netzmittel F | – | – | – | – | – | – | – | – | – | – | – | – | 12.0 | – | 18.0 |
| Netzmittel G | – | – | – | – | – | – | – | – | 3.6 | – | – | – | – | 2.0 | – |
| Netzmittel H | – | – | – | – | – | – | – | – | 14.4 | – | – | – | – | 4.0 | – |
| Netzmitel I | – | – | – | – | – | 9.0 | – | – | – | – | – | – | – | – | – |
| Feuchthaltemittel A | – | 12.0 | – | 6.0 | – | – | 15.0 | – | – | – | 6.0 | – | – | – | – |
| Feuchthaltemittel B | – | – | – | – | 12.0 | – | – | – | – | – | – | – | – | 6.0 | – |
| Tetraethylenglykol | 12.0 | – | – | – | – | – | – | 6.0 | – | – | – | – | – | – | 18.0 |
| Ethylenglykol | – | – | 6.0 | – | – | – | – | – | 12.0 | – | – | – | 6.0 | – | – |
| Propylenglykol | – | – | – | – | – | 6.0 | – | – | – | 6.0 | – | 12.0 | – | – | – |
| Phosphorsäure (85%) | – | 0.3 | – | – | – | 0.1 | – | – | – | – | 0.2 | 0.3 | – | – | – |
| Mononatriumphosphat | 2.0 | – | – | – | 6.5 | – | – | 2.5 | – | – | – | – | 0.6 | 1.2 | – |
| Trinatriumphosphat | 2.4 | 3.0 | 1.2 | 0.6 | 3.0 | 1.2 | 0.6 | 2.4 | 0.6 | 0.6 | 1.2 | 2.4 | 0.6 | 1.2 | 0.6 |
| Bakterizid A | 1.2 | – | – | 0.6 | 1.2 | – | – | 1.2 | 0.6 | – | – | 1.2 | – | – | 1.8 |
| Bakterizid B | – | 1.8 | 1.2 | – | – | 0.6 | 0.6 | – | – | 1.2 | 0.6 | – | 1.2 | 0.6 | – |
| pH-Wert | 7.5 | 7.0 | 7.6 | 6.7 | 5.3 | 6.5 | 6.7 | 7.1 | 6.6 | 6.6 | 6.8 | 6.5 | 6.2 | 6.0 | 6.6 |
| HLB-Wert | 14.6 | 15.4 | 15.0 | 13.5 | 15.0 | 13.0 | 14.5 | 14.6 | (8.6/16.7) 15.0 | 14.5 | 13.5 | 15.4 | 15.6 | (8.6/16.7) 14.0 | 15.6 |
| Oberflächenspannung dyn/cm² | 34.1 | 34.7 | 34.5 | 34.3 | 34.0 | 35.2 | 32.8 | 34.5 | 35.5 | 32.9 | 33.9 | 34.9 | 33.0 | 35.7 | 32.8 |

Beispiele 11 bis 15

Wiederum in Übereinstimmung mit den Einschränkungen hinsichtlich des prozentualen Anteils der einzelnen Komponenten, die für die Beispiele 2 bis 10 galten, sind in Tabelle 1 zusätzlich Beispiele für Lösungen aufgeführt, die nach dem in Beispiel 1 beschriebenen Verfahren hergestellt wurden.

Das oberflächenaktive Mittel F ist Polyoxyethylensorbitanmonopalmitat.

Diese Lösungen wurden nicht nur auf negativ oder positiv arbeitenden Flachdruckplatten geprüft, sondern auch auf nicht vorbeschichteten, sondern vom Verbraucher zu beschichtenden Trägern, für die herkömmliche Chemikalien und Verfahren verwendet wurden.

Ein typischer nicht vorbeschichteter Träger (z.B. ® Front Page, eine von Western Litho hergestellte, anodisch oxidierte Aluminiumplatte) wurde mit einem wasserlöslichen Kondensationsprodukt aus p-Diazodiphenylaminsulfat und Paraformaldehyd in Schwefelsäure, das anschliessend mit Zinkchlorid ausgefällt wurde, beschichtet. Nach dem Trocknen der Beschichtung wurde die Platte durch eine Negativvorlage mit aktinischer Strahlung belichtet. Die Platte wurde sodann mit einem Lackentwickler (® Black Diamond, Hersteller: Western Litho) entwickelt, mit Wasser abgespült und getrocknet.

In den Beispielen 11 bis 15 wiesen die Platten ebenso wie in den Beispielen 1 bis 10 einen völlig sauberen Hintergrund auf und zeigten ein Bild, das sofort und ohne ein Anzeichen von Blindwerden Farbe annahm.

Vergleichsbeispiel V1

Durch Auflösen von 36 g Gummi arabicum in 130 g auf 65 °C erwärmten Wassers wurde eine Lösung hergestellt. Nach 10 Minuten wurde die Wärmezufuhr gestoppt, und 407,6 g Wasser von Raumtemperatur wurden hinzugefügt. Dazu kamen in beliebiger Reihenfolge folgende Bestandteile: 21,0 g Polyethylenglykol (mittleres Molekulargewicht 400), 0,6 g Trinatriumphosphat und 0,6 g antibakterielles Mittel A und 12,0 g oberflächenaktives Mittel C.

Diese Schlussbehandlungslösung wurde auf positiv und negativ arbeitende Flachdruckplatten aufgetragen und auf die gleiche Weise, wie in den vorhergehenden Beispielen beschrieben, geprüft.

Mit dieser Lösung war der Hintergrund zwar wie gewünscht sauber, aber das Bild war irreversibel blind geworden, so dass keine Farbe haften blieb.

Vergleichsbeispiel V2

Zum weiteren Vergleich wurden 24,0 g Tapiokadextrin unter Rühren in 130,0 g auf 65 °C erhitzten Wassers aufgelöst. Das Rühren wurde nach der Zugabe noch 10 Minuten fortgesetzt, dann wurde die Wärmezufuhr gestoppt. 425,9 g Wasser von Raumtemperatur wurden zugegeben. Folgende Bestandteile wurden in beliebiger Reihenfolge hinzugefügt: 12,0 g pulverisiertes Natriumlaurylsulfat (d.h. ein anionisches oberflächenaktives Mittel), 6,0 g Feuchthaltemittel A, 1,2 g Trinatriumphosphat, 0,3 g 85%ige Phosphorsäure und 0,6 g 6-Acetoxy-2,4-dimethyl-1,3-dioxan.

Diese Schlussbehandlungslösung wurde auf positiv und auf negativ arbeitenden Flachdruckplatten in der vorstehend beschriebenen Weise geprüft. Beim Prüfen der Platte auf ihre Funktionstüchtigkeit zeigte sich, dass der Hintergrund eine deutlich verminderte Hydrophilie aufwies und die Farbe dazu neigte, daran haften zu bleiben. Das Bild nahm Farbe an, doch brauchte man zum Einfärben mehr Kraft als wünschenswert ist. Diese Lösung war nicht zufriedenstellend.

Vergleichsbeispiel V3

In der gleichen Weise wie in den vorhergehenden Beispielen wurden 36,0 g Tapiokadextrin in 130,0 g auf 65 °C erhitzten Wassers aufgelöst und 10 Minuten gerührt. Dazu kamen 419,6 g Wasser von Raumtemperatur. Folgende Bestandteile wurden dann hinzugefügt: 12,0 g Polyoxyethylendecylether (6 Mol Ethylenoxid), 1,2 g antibakterielles Mittel B, 0,6 g Trinatriumphosphat und 0,6 g Mononatriumphosphat.

Beim Prüfen auf positiv und negativ arbeitenden Druckplatten kam mit dieser feuchtmittelfreien Lösung ein sehr sauberer Hintergrund zustande. Doch war es schwierig, den vorhandenen Film vom Bild zu trennen, das folglich nicht leicht Farbe annahm, und es bedurfte beträchtlicher Anstrengung, bis es den Anforderungen genügte.

Vergleichsbeispiel V4

Statt Tapiokadextrin wurde Polyvinylalkohol als filmbildendes Mittel verwendet, der zu etwa 85% hydrolysiert war, der Rest sind Vinylacetateinheiten. 6,0 g dieses Harzes wurden in 145 g auf 65 °C erhitzten Wassers aufgelöst. Nach zehnminütigem Rühren wurde die Wärmezufuhr gestoppt, und 440,2 g Wasser von Raumtemperatur wurden hinzugefügt. Dazu kamen die folgenden Bestandteile: 6,0 g eines aus Alkylarylpolyoxyethylen bestehenden oberflächenaktiven Mittels (HLB-Wert = 13,5), 6,0 g Polyethylenglykol (Molekulargewicht 200), 0,6 g Mononatriumphosphat, 1,2 g Trinatriumphosphat und 0,6 g Konservierungsmittel.

Bei der Prüfung auf negativ und auf positiv arbeitenden Platten, bei der nach der im Beispiel 1 beschriebenen Methode verfahren wurde, wurde mit dieser Polyvinylalkohol enthaltenden Lösung ein sauberer Hintergrund erzielt. Doch war das Bild irreversibel blind geworden, da es nicht dazu gebracht werden konnte, Farbe anzunehmen.

Vergleichsbeispiel V5

Auf gleiche Weise wurden 12,0 g des bereits beschriebenen Polyvinylalkohols in 143,7 g auf 65 °C erhitzten Wassers gegeben. Nach 10minütigem Rühren wurde die Wärmezufuhr gestoppt, und 430,5 g Wasser von Raumtemperatur wurden hinzugefügt. Dazu kamen dann die folgenden Zusätze: 6,0 g Natriumoctylsulfat, 6,0 g Polyethylenglykol (Molekulargewicht 200), 0,6 g Mononatriumphosphat, 0,6 g Trinatriumphosphat und 0,6 g Konservierungsmittel.

Diese Lösung wurde gemäss der in Beispiel 1 gegebenen Beschreibung sowohl auf positiv als auch auf negativ arbeitenden Flachdruckplatten geprüft. Das Ergebnis zeigte ein teilweise blindgewordenes Bild und einen aufgrund des teilweisen Verlustes der Hydrophilie leicht getonten Hintergrund.

Vergleichsbeispiel V6

Auf die gleiche Weise wurden 18,0 g im wesentlichen kaltwasserlöslichen Tapiokadextrins in 143,0 g auf 65 °C erwärmten Wassers gegeben. Nach 10minütigem Rühren wurde die Wärmezufuhr gestoppt, und 426,8 g Wasser von Raumtemperatur wurden hinzugefügt. Dazu kamen dann folgende Bestandteile: 6,0 g eines als Dioctylester von Natriumsulfobernsteinsäure beschriebenen oberflächenaktiven Mittels, 6,0 g Propylenglykol, 0,6 g Trinatriumphosphat und 0,6 g Konservierungsmittel.

Bei der Prüfung auf negativ und auf positiv arbeitenden Platten gemäss der in Beispiel 1 gegebenen Beschreibung führte diese ein anionisches oberflächenaktives Mittel enthaltende Lösung zu einem Bild, bei dem ein teilweiser Verlust der Oleophilie festzustellen war, und ausserdem zu einem etwas Farbe annehmenden Hintergrund.

Vergleichsbeispiel V7

Auf die gleiche Weise wurden 36,0 g eines im wesentlichen kaltwasserlöslichen Tapiokadextrins in 135,0 g auf 65 °C erhitzten Wassers gegeben. Nach 10minütigem Rühren wurde die Wärmezufuhr gestoppt, und 404,2 g Wasser von Raumtemperatur wurden hinzugefügt. Dazu kamen folgende Zusätze: 12,0 g eines als hydroxyethylierter Alkylguanidinaminkomplex bezeichneten oberflächenaktiven Mittels (kationisch), 1,2 g Trinatriumphosphat, 12,0 g Propylenglykol und 0,6 g eines Konservierungsmittels.

Bei der Prüfung auf positiv und auf negativ arbeitenden Druckplatten gemäss der beschriebenen bevorzugten Ausführungsform führte diese ein kationisches oberflächenaktives Mittel enthaltende Lösung zu dem Ergebnis, dass das Bild zwar einigermassen farbannehmend war, dass der Hintergrund aber stark tonte. Die Farbe liess sich durch keine nachfolgende Behandlung entfernen.

Vergleichsbeispiel V8

In gleicher Weise wurden 18,0 g eines im wesentlichen kaltwasserlöslichen Tapiokadextrins in 143,0 g auf 65 °C erwärmten Wassers aufgelöst. Nach 10minütigem Rühren wurde die Wärmezufuhr gestoppt, und 425 g Wasser von Raumtemperatur wurden hinzugefügt. Dazu kamen als weitere Bestandteile: 6,0 g eines ethoxylierten Sorbitanmonolaurats (HLB-Wert 16,7), 6,0 g Sorbit, 0,6 g Trinatriumphosphat und 0,6 g Konservierungsmittel. Bei der Prüfung auf negativ und auf positiv arbeitenden Platten gemäss der beschriebenen bevorzugten Ausführungsform führte diese Lösung mit Sorbit als Feuchthaltemittel zum Blindwerden des Bildes.

Vergleichsbeispiel V9

In gleicher Weise wurden 36,0 g eines im wesentlichen kaltwasserlöslichen Tapiokadextrins in 135,0 g auf 65 °C erhitzten Wassers gelöst. Nach 10minütigem Rühren wurde die Wärmezufuhr gestoppt, und 405,6 g Wasser von Raumtemperatur wurden hinzugegeben. Dazu kamen folgende Bestandteile: 12,0 g eines als Octylphenoxypolyoxyethylenethanol beschriebenen oberflächenaktiven Mittels mit dem HLB-Wert 13,5, 9,0 g Glycerin, 0,6 g Mononatriumphosphat, 1,2 g Trinatriumphosphat und 0,6 g Konservierungsmittel.

Bei der Prüfung sowohl auf negativ als auch auf positiv arbeitenden Platten gemäss der beschriebenen bevorzugten Ausführungsform führte diese Lösung mit Glycerin als Feuchthaltemittel zwar zu einem sauberen Hintergrund, doch verursachte sie irreversibles Blindwerden des Bildes.

Vergleichsbeispiel V10

In gleicher Weise wurden 18,0 g eines in kaltem Wasser relativ unlöslichen Tapiokadextrins in 142,0 g auf 65 °C erhitzten Wassers aufgelöst. Nach 20minütigem Rühren wurde die Wärmezufuhr gestoppt, und 426,8 g Wasser von Raumtemperatur wurden zugesetzt. Dazu kamen die folgenden Bestandteile: 6,0 g eines Polyoxyethylentridecylethers mit dem HLB-Wert 15,4, 6,0 g Polyethylenglykol (Molekulargewicht 200), 0,6 g Trinatriumphosphat und 0,6 g Konservierungsmittel.

Bei der Prüfung auf positiv und auf negativ arbeitenden Platten gemäss der beschriebenen bevorzugten Ausführungsform bildete diese Lösung, die in kaltem Wasser relativ unlösliches Tapiokadextrin (d.h. nicht nach der gegebenen Definition ein «im wesentlichen in kaltem Wasser lösliches» Dextrin) enthielt, einen Film, der nicht völlig vom Bild entfernt werden konnte. Die Platte genügte daher wegen Blindwerdens der Bildstellen nicht den Anforderungen.

Beispiele 16 und 17

Kaltwasserlösliches Mais- bzw. Kartoffeldextrin wurde im folgenden Rezept verwendet:

| | |
|---|---|
| Dextrin | 27,0 g |
| oberflächenaktives Mittel D | 12,0 g |
| Polyethylenglykol (Molekulargewicht 200) | 15,0 g |
| Trinatriumphosphat | 0,6 g |
| Konservierungsmittel | 0,6 g |
| Wasser | 538,2 g |

Das Dextrin wurde in 25% des Wassers aufgelöst, wobei bei einer Temperatur von 65 °C 10 Minuten gerührt wurde. Die übrigen Bestandteile wurden unter fortgesetztem Rühren hinzugegeben, so dass eine klare homogene Lösung entstand.

Die Mais- bzw. Kartoffeldextrin enthaltenden Schlussbehandlungslösungen wurden dann sowohl auf positiv als auch auf negativ arbeitenden Platten verwendet und gemäss Beispiel 1 geprüft. In beiden Fällen war der Hintergrund vollständig hydrophil. Doch nahm das Bild etwas langsamer Farbe an als in den Fällen, wo kaltwasserlösliches Tapiokadextrin verwendet wurde, wobei das

Maisdextrinrezept sich als etwas besser erwies als das Kartoffeldextrinrezept. Beide Rezepte wurden in ihren Leistungen als zufriedenstellend bewertet.

**Patentansprüche**

1. Wässrige Schlussbehandlungslösung für Flachdruckplatten mit einem Gehalt an
a) 1,5 bis 10 Gew.-% eines im wesentlichen in kaltem Wasser löslichen Dextrins oder 0,1 bis 3 Gew.-% Polyvinylpyrrolidon,
b) 0,2 bis 7 Gew.-% mindestens eines nichtionischen oberflächenaktiven Mittels mit einem hydrophil-lipophilen Gleichgewicht zwischen 12 und 18,
c) 0,3 bis 5 Gew.-% eines Feuchthaltemittels aus der Gruppe Polyethylenglykol mit einem Molekulargewicht nicht grösser als 800, Polypropylenglykol, Ethylenglykol und Propylenglykol,
d) 0,05 bis 13 Gew.-% eines anorganischen Salzes aus der Gruppe Natriumnitrat, Natriumsulfat, Calciumnitrat, Magnesiumnitrat, Magnesiumsulfat, Ammoniumphosphat, Ammoniumnitrat, Ammoniumsulfat, Natriumacetat, Kaliumtartrat, Mono-, Di- und Trinatriumphosphat und entsprechenden Kaliumphosphaten und
e) 67 bis 99,15 Gew.-% Wasser.

2. Schlussbehandlungslösung gemäss Anspruch 1, dadurch gekennzeichnet, dass das Dextrin Tapiokadextrin ist.

3. Schlussbehandlungslösung gemäss Anspruch 1, dadurch gekennzeichnet, dass das Polyvinylpyrrolidon ein durchschnittliches Molekulargewicht zwischen 5000 und 100 000 besitzt.

4. Schlussbehandlungslösung gemäss Anspruch 1, dadurch gekennzeichnet, dass das oberflächenaktive Mittel eine ethoxylierte Hydroxyverbindung der Formel

$$R\text{-}(OCH_2CH_2)_n\text{-}R'$$

ist, in der R ein Alkylarylrest oder ein linearer aliphatischer Rest, R′ ein Hydroxyethylrest und n = 1 bis 100 ist.

5. Schlussbehandlungslösung gemäss Anspruch 1, dadurch gekennzeichnet, dass das oberflächenaktive Mittel eine Mischung aus Sorbitanestern und ethoxylierten Sorbitanestern ist.

6. Schlussbehandlungslösung gemäss Anspruch 1, dadurch gekennzeichnet, dass das anorganische Salz ein Alkaliphosphat ist.

7. Schlussbehandlungslösung gemäss Anspruch 1, dadurch gekennzeichnet, dass ihr pH-Wert zwischen 2,5 und 9,5 liegt.

8. Verfahren zum Behandeln einer entwickelten Flachdruckplatte mit einer Schlussbehandlungslösung, bei dem man
a) eine wässrige Schlussbehandlungslösung auf die Oberfläche der Platte aufträgt,
b) diese Schlussbehandlungslösung über die Oberfläche der Platte gleichmässig verteilt und
c) die Schlussbehandlungslösung zu einem dünnen Film trocknet,

dadurch gekennzeichnet, dass man eine Schlussbehandlungslösung mit einem Gehalt an
a) 1,5 bis 10 Gew.-% eines im wesentlichen in kaltem Wasser löslichen Dextrins oder 0,1 bis 3 Gew.-% Polyvinylpyrrolidon,
b) 0,2 bis 7 Gew.-% mindestens eines nichtionischen oberflächenaktiven Mittels mit einem hydrophil-lipophilen Gleichgewicht zwischen 12 und 18,
c) 0,3 bis 5 Gew.-% eines Feuchthaltemittels aus der Gruppe Polyethylenglykol mit einem Molekulargewicht nicht grösser als 800, Polypropylenglykol, Ethylenglykol und Propylenglykol,
d) 0,05 bis 13 Gew.-% eines anorganischen Salzes aus der Gruppe Natriumnitrat, Natriumsulfat, Calciumnitrat, Magnesiumnitrat, Magnesiumsulfat, Ammoniumphosphat, Ammoniumnitrat, Ammoniumsulfat, Natriumacetat, Kaliumtartrat, Mono-, Di- und Trinatriumphosphat und entsprechenden Kaliumphosphaten und
e) 67 bis 99,15 Gew.-% Wasser verwendet.

9. Verfahren gemäss Anspruch 8, dadurch gekennzeichnet, dass das hydrophile Polymer ein Tapiokadextrin und das oberflächenaktive Mittel ein ethoxylierter linearer Alkohol der Formel

$$R\text{-}(OCH_2CH_2)_n\text{-}R'$$

ist, wobei R ein linearer aliphatischer Rest, R′ ein Hydroxyethylrest und n = 1 bis 100 ist, das Feuchthaltemittel ein Polyethylenglykol mit einem Molekulargewicht von nicht mehr als 800 und das anorganische Salz ein Alkaliphosphat ist.

**Claims**

1. An aqueous lithographic plate finisher comprising
a) 1.5 to 10% by weight of a substantially cold watersoluble dextrin or 0.1 to 10% by weight of polyvinyl pyrrolidone,
b) 0,2 to 7% by weight of at least one nonionic surfactant having an hydrophile-lipophile balance of between 12 and 18,
c) 0.3 to 5% by weight of a humectant selected from the group consisting of polyethylene glycol having a molecular weight not exceeding 800, polypropylene glycol, ethylene glycol and propylene glycol,
d) 0.05 to 13% by weight of an inorganic salt selected from the group consisting of sodium nitrate, sodium sulfate, calcium nitrate, magnesium nitrate, magnesium sulfate, ammonium phosphate, ammonium nitrate, ammonium sulfate, sodium acetate, potassium tartrate, mono-, di- and trisodium and corresponding potassium phosphates, and
e) 67 to 99.15% by weight of water.

2. The plate finisher of Claim 1, wherein the dextrin is tapioca dextrin.

3. The plate finisher of Claim 1, wherein the polyvinyl pyrrolidone has an averadge molecular weight between 5000 and 100 000.

4. The plate finisher of Claim 1, wherein the surfactant is an ethoxylated hydroxy compound having the formula

$$R\text{-}(OCH_2CH_2)_n\text{-}R'$$

where R is alkyl aryl or linear aliphatic, R′ is hydroxyethyl and n = 1 to 100.

5. The plate finisher of Claim 1, wherein the surfactant is a blend of sorbitan esters and ethoxylated sorbitan esters.

6. A plate finisher according to Claim 1, wherein the salt is an alkali phosphate.

7. A plate finisher according to Claim 1, wherein the pH is between 2.5 and 9.5.

8. A process for finishing a developed lithographic printing plate comprising

a) applying an aqueous finisher to the surface of said plate,
b) distributing said finisher uniformly over the surface of said plate, and
c) drying said finisher to a thin film,

characterized in that a plate finisher is applied comprising

a) 1.5 to 10% by weight of a substantially cold water-soluble dextrin or 0.1 to 10% by weight of polyvinyl pyrrolidone,
b) 0.2 to 7% by weight of at least one nonionic surfactant having an hydrophile-lipophile balance of between 12 and 18,
c) 0.3 to 5% by weight of a humectant selected from the group consisting of polyethylene glycol having a molecular weight not exceeding 800, polypropylene glycol, ethylene glycol and propylene glycol,
d) 0.05 to 13% by weight of an inorganic salt selected from the group consisting of sodium nitrate, sodium sulfate, calcium nitrate, magnesium nitrate, magnesium sulfate, ammonium phosphate, ammonium nitrate, ammonium sulfate, sodium acetate, potassium tartrate, mono-, di- and trisodium and corresponding potassium phosphates, and
e) 67 to 99.15% by weight of water.

9. A process of claim 8, wherein the hydrophilic polymer is a tapioca dextrin, the surfactant is an ethoxylated linear alcohol having the formula

$$R\text{-}(OCH_2CH_2)_n\text{-}R'$$

where R is linear aliphatic, R′ is hydroxyethyl and n = 1 to 100, the humectant is a polyethylene glycol having an average molecular weight not exceeding 800, and the inorganic salt is an alkali phosphate.

**Revendications**

1. Solution de traitement de finition, aqueuse, pour plaques pour impression à plat, avec une teneur de:

a) 1,5 à 10% en poids d'une dextrine essentiellement soluble dans l'eau froide ou de 0,1 à 3% en poids de polyvinylpyrrolidone,
b) 0,2 à 7% en poids d'au moins un agent tensioactif non-ionique avec un équilibre hydrophile-lipophile compris entre 12 et 18,
c) 0,3 à 5% en poids d'un agent d'humidification choisi parmi le polyéthylèneglycol ayant une masse moléculaire non supérieure à 800, le polypropylène glycol, l'éthylène glycol et le propylène glycol,
d) 0,05 à 13% en poids d'un sel minéral choisi parmi le nitrate de sodium, le sulfate de sodium, le nitrate de calcium, le nitrate de magnésium, le sulfate de magnésium, le phosphate d'ammonium, le nitrate d'ammonium, le sulfate d'ammonium, l'acétate de sodium, le tartrate de potassium, les phosphates mono-, di- et trisodique et les phosphates de potassium correspondants, et
e) 67 à 99,15% en poids d'eau.

2. Solution de traitement de finition selon la revendication 1, caractérisée en ce que la dextrine est une dextrine de tapioca.

3. Solution de traitement de finition selon la revendication 1, caractérisée en ce que la polyvinylpyrrolidone a une masse moléculaire moyenne comprise entre 5000 et 100 000.

4. Solution de traitement de finition selon la revendication 1, caractérisée en ce que l'agent tensioactif est un composé hydroxylé éthoxylé de formule

$$R\text{-}(OCH_2CH_2)_n\text{-}R'$$

dans lequel R est un groupe alkylaryle ou un groupe aliphatique linéaire, R′ est un groupe hydroxyéthyle et n a une valeur de 1 à 100.

5. Solution de traitement de finition selon la revendication 1, caractérisée en ce que l'agent tensioactif est un mélange d'esters de sorbitan et d'esters de sorbitan éthoxylés.

6. Solution de traitement de finition selon la revendication 1, caractérisée en ce que le sel inorganique est un phosphate alcalin.

7. Solution de traitement de finition selon la revendication 1, caractérisée en ce que sa valeur de pH est comprise entre 2,5 et 9,5.

8. Procédé pour le traitement d'une plaque pour impression à plat, développée, avec une solution de traitement de finition, dans lequel:

a) on applique une solution aqueuse de traitement de finition sur la surface de la plaque,
b) on répartit uniformément cette solution de traitement de finition sur la surface de la plaque et
c) on sèche la solution de traitement de finition en un film mince,

lequel procédé est caractérisé en ce qu'on utilise une solution de traitement de finition avec une teneur de

a) 1,5 à 10% en poids d'une dextrine essentiellement soluble dans l'eau froide ou de 0,1 à 3% en poids de polyvinylpyrrolidone,

b) 0,2 à 7% en poids d'au moins un agent tensioactif non-ionique ayant un équilibre hydrophile-lipophile compris entre 12 et 18,
c) 0,3 à 5% en poids d'un agent d'humidification choisi parmi le polyéthylèneglycol ayant une masse moléculaire non supérieure à 800, le polypropylèneglycol, l'éthylèneglycol et le propylèneglycol,
d) 0,05 à 13% en poids d'un sel minéral choisi parmi le nitrate de sodium, le sulfate de sodium, le nitrate de calcium, le nitrate de magnésium, le sulfate de magnésium, le phosphate d'ammonium, le nitrate d'ammonium, le sulfate d'ammonium, l'acétate de sodium, le tartrate de potassium, les phosphates mono-, di- et trisodiques et les phosphates de potassium correspondants, et
e) 67 à 99,15% en poids d'eau.

9. Procédé selon la revendication 8, caractérisé en ce que le polymère hydrophile est une dextrine de tapioca et l'agent tensioactif est un alcool linéaire éthoxylé de formule

$$R\text{-}(OCH_2CH_2)_n\text{-}R'$$

dans lequel R est un groupe aliphatique linéaire, R' est un groupe hydroxyéthyle et n = 1 à 100, l'agent d'humidification est un polyéthylène glycol ayant une masse moléculaire non supérieure à 800 et le sel inorganique est un phosphate alcalin.